# EUROPEAN PATENT APPLICATION

(11) **EP 4 835 734 A1**
(43) Date of publication of application: **04.11.2026**
(21) Application number: 26175672.0
(22) Date of filing: 30.04.2026
(51) Int. Cl.: G06N 3/008, B25J 9/16, B25J 11/00

(54) **CONTROL DEVICE, ROBOT, CONTROL METHOD, AND PROGRAM**

(30) Priority: 02.05.2025 JP 2025076533
(71) Applicant: Casio Computer Co., Ltd., Tokyo 151-8543 (JP)
(72) Inventor: TERAZAKI, Tsutomu, 205-8555 Tokyo (JP); YAMAZAKI, Daiki, 205-8555 Tokyo (JP); MAEDA, Maki, 205-8555 Tokyo (JP)
(74) Representative: Plougmann Vingtoft a/s

(57) **Abstract**

A control device includes one or more processors configured to: operate a robot in a user recognition mode in response to the one or more processors recognizing a specific user based on detection data from a sensor of the robot; and operate the robot in a normal mode when not operating the robot in the user recognition mode. During operating the robot in the user recognition mode, the one or more processors determine an action to be performed by the robot by selecting the action from a candidate action group based on a length of a simulated growth period of the robot. The candidate action group includes a specific action that is not performed in the normal mode but is performable in the user recognition mode.

## Description

### CROSS-REFERENCE TO RELATED APPLICATION

This application claims priority to, and the benefit of, Japanese Patent Application No. 2025-076533, filed on May 2, 2025. The entire specification, claims, and drawings of Japanese Patent Application No. 2025-076533 are incorporated herein by reference.

### BACKGROUND OF THE INVENTION

### TECHNICAL FIELD

The present disclosure relates to a control device, a robot, a control method, and a program.

### DESCRIPTION OF RELATED ART

Conventionally, robots capable of behaving like living creatures are known that detect contact or speech from users via sensors and select and perform actions based on the detection results (e.g., JP 2002-59389A).

### SUMMARY OF THE INVENTION

However, in the above conventional technology, the selection rules for actions based on detection results are pre-programmed and fixed. Therefore, even as the cumulative operation period increases, the selectable actions do not change. Consequently, growth corresponding to the cumulative operation period cannot be perceived, resulting in a lack of lifelike qualities.

An object of the present disclosure is to cause a robot to perform actions that convey a sense of lifelike growth.

To achieve at least one of the above-mentioned objects, a control device according to the present disclosure comprises one or more processors configured to: operate a robot in a user recognition mode in response to the one or more processors recognizing a specific user based on detection data from a sensor of the robot; and operate the robot in a normal mode when not operating the robot in the user recognition mode, wherein, during operating the robot in the user recognition mode, the one or more processors determine an action to be performed by the robot by selecting the action from a candidate action group based on a length of a simulated growth period of the robot, the candidate action group including a specific action that is not performed in the normal mode but is performable in the user recognition mode.

According to the present disclosure, a robot can be made to perform actions that convey a sense of lifelike growth.

### BRIEF DESCRIPTION OF DRAWINGS

The accompanying drawings are not intended as a definition of the limits of the invention but illustrate embodiments of the invention and, together with the general description given above and the detailed description of the embodiments given below, serve to explain the principles of the invention, wherein:
FIG. 1 is a diagram illustrating the appearance of a robot;
FIG. 2 is a schematic diagram illustrating a configuration of a main body of the robot;
FIG. 3 is a block diagram illustrating a functional configuration of the robot;
FIG. 4 is a diagram illustrating status data;
FIG. 5 is a diagram illustrating an emotion map;
FIG. 6 is a diagram illustrating an external stimulus table;
FIG. 7 is a diagram illustrating a gesture selection table corresponding to holding body petting;
FIG. 8 is a diagram illustrating another example of the gesture selection table corresponding to holding body petting;
FIG. 9 is a diagram illustrating a gesture selection table corresponding to speaking;
FIG. 10 is a flowchart illustrating a control procedure for robot control processing;
FIG. 11 is a flowchart illustrating a control procedure for an input determination process; and
FIG. 12 is a flowchart illustrating a control procedure for an output determination process.

### DETAILED DESCRIPTION

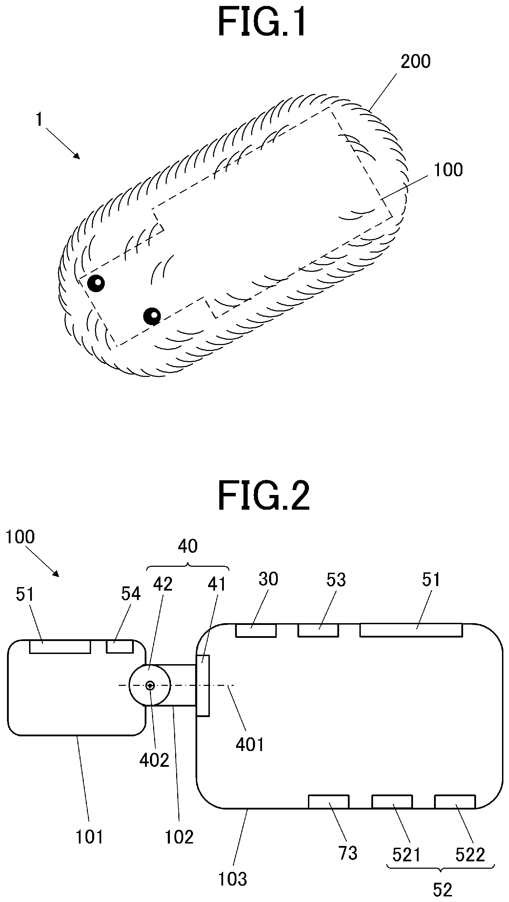

Hereinafter, one or more embodiments according to the present disclosure will be described with reference to the drawings. As illustrated in FIG. 1, a robot 1 includes a main body 100 and an exterior 200 that covers the entire surface of the main body 100. The robot 1 is a pet robot modeled after a small living creature. The robot 1 can perform a plurality of different actions that imitate gestures of a living creature. The exterior 200 is made of a flexible material and deforms in response to movement of the main body 100. The exterior 200 includes, for example, fur formed of pile fabric, decorative components imitating eyes, and the like. The inner surface of the exterior 200 (a surface contacting the main body 100) is provided with engagement portions (not shown) that can engage with fasteners (not shown) provided on the surface of the main body 100. By engaging these engagement portions with the fasteners, it is possible to prevent the main body 100 and the exterior 200 from being significantly displaced from each other. The number of the engagement portions and the fasteners is minimized to avoid hindering movement of the main body 100 and to facilitate easy attachment and detachment of the exterior 200. In the present embodiment, the engagement portions and fasteners are provided at a total of three locations: positions corresponding to the left and right eyes of the robot 1 and the rear end portion of the robot 1.

As illustrated in FIG. 2, the main body 100 of the robot 1 includes a head 101, a torso 103, and a connector 102 that connects the head 101 to the torso 103. The main body 100 includes a drive unit 40 that moves the head 101 relative to the torso 103. In the robot 1, the head 101 corresponds to a "movable portion". The drive unit 40 includes a twisting motor 41 and an up-down movement motor 42. The twisting motor 41 is a servo motor that rotates the head 101 and the connector 102 within a predetermined angular range about a first rotation axis 401 extending in the direction of the connector 102. Operation of the twisting motor 41 enables the robot 1 to perform a twisting motion of the head 101. The up-down movement motor 42 is a servo motor that rotates the head 101 within a predetermined angular range about a second rotation axis 402 perpendicular to the first rotation axis 401. Operation of the up-down movement motor 42 enables the robot 1 to perform an up-down motion of the head 101. The up-down movement direction of the head 101 can also be inclined with respect to the vertical direction, depending on the twisting angle of the head 101 caused by the twisting motor 41. By finely and periodically operating the twisting motor 41 and/or the up-down movement motor 42, the robot 1 can achieve movements where the head 101 sways or shakes. By suitably changing and combining the timing, amount, and speed of the operations of the twisting motor 41 and the up-down movement motor 42, it is possible to cause the robot 1 to perform various actions, such as an action of joy, an action of surprise, and a breathing action that imitates the breathing of a living creature. Among these, the breathing action is one form of a spontaneous action performed by the robot 1. The main body 100 includes touch sensors 51, a motion sensor 52, an illuminance sensor 53, a microphone 54, a sound output unit 30, and a power reception coil 73. The motion sensor 52 includes an acceleration sensor 521 and a gyro sensor 522. The touch sensors 51 are disposed in respective upper portions of the head 101 and the torso 103. The motion sensor 52 and the power reception coil 73 are disposed adjacent to the lower surface of the torso 103. The illuminance sensor 53 and the sound output unit 30 are disposed in an upper portion of the torso 103. The microphone 54 is disposed in an upper portion of the head 101, adjacent to the base of the head 101.

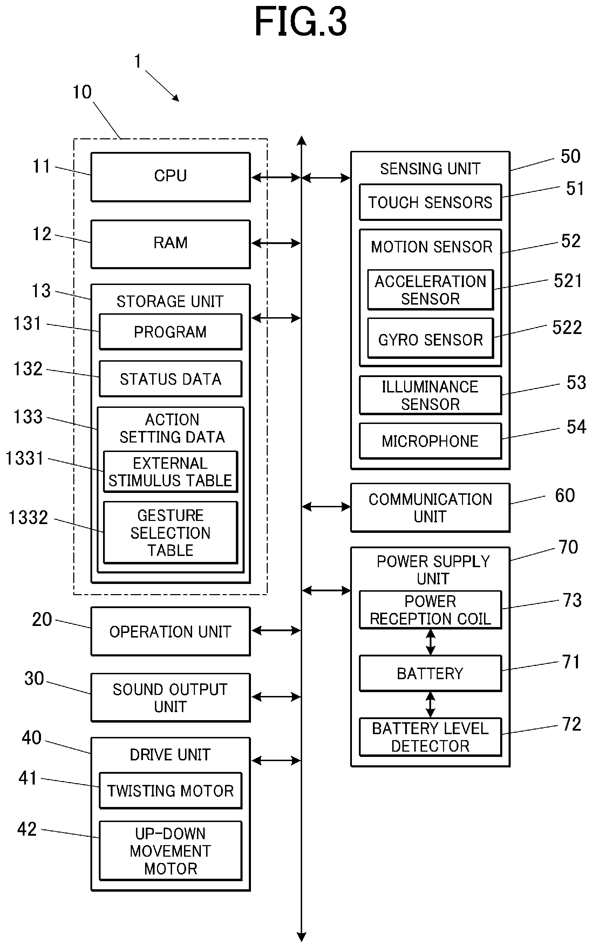

As illustrated in FIG. 3, the robot 1 includes a central processing unit (CPU, one or more processors) 11, a random-access memory (RAM) 12, a storage unit 13, an operation unit 20, a sound output unit 30, a drive unit 40, a sensing unit (sensor) 50, a communication unit 60, and a power supply unit 70. Among these components, the CPU 11, the RAM 12, and the storage unit 13 constitute a control device 10. The components of the robot 1 are connected to each other via a data transmission path such as a bus. Each functional component shown in FIG. 3 is provided in the main body 100. The CPU 11 is a processor that reads and executes a program 131 stored in the storage unit 13 to execute various arithmetic processes to control the operation of the robot 1. The robot 1 may include a plurality of processors (e.g., a plurality of CPUs), and the plurality of processors may execute the plurality of processes executed by the CPU 11 in the present embodiment. In this case, the plurality of processors constitutes one or more processors. In addition, the plurality of processors may be involved in a common process, or the plurality of processors may independently execute different processes in parallel. The RAM 12 provides a working memory space for the CPU 11 and stores temporary data.

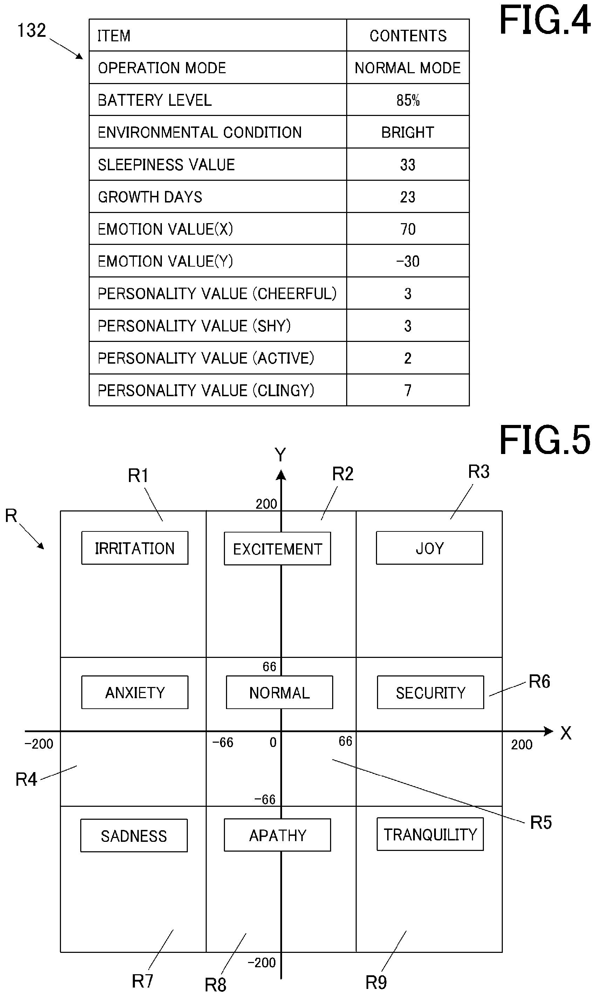

The storage unit 13 is a non-transitory recording medium readable by the CPU 11 serving as a computer and stores the program 131 and various data. The storage unit 13 includes, for example, a nonvolatile memory such as a flash memory. The program 131 is stored in the storage unit 13 in the form of computer-readable program code. Examples of data stored in the storage unit 13 include status data 132 and action setting data 133. The status data 132 records data representing the current state of the robot 1 and its surrounding environment. The status data 132 is sequentially updated based on the operation history of the robot 1 and other factors. As illustrated in FIG. 4, the status data 132 records information such as "operation mode", "battery level", "environmental condition", "sleepiness value", "growth days", "emotion values", and "personality values". The "operation mode" of the robot 1 according to the present embodiment transitions between a "user recognition mode" and a "normal mode". The user recognition mode indicates that the robot 1 recognizes a user. The normal mode is any mode other than the user recognition mode. Although not shown in the drawings, the robot 1 also transitions between an "awake mode" and a "sleep mode". The awake mode indicates that the robot 1 is not asleep. The sleep mode indicates that the robot 1 is asleep. Therefore, there are four possible states for the robot 1: the "normal mode" and "awake mode", the "normal mode" and "sleep mode", the "user recognition mode" and "awake mode", and the "user recognition mode" and "sleep mode". The robot may be configured not to transition to the user recognition mode while operating in the sleep mode. The "battery level" indicates the remaining amount of power charged in a battery 71. The "environmental condition" represents the brightness around the robot 1 and is either "bright" or "dark". The "sleepiness value" is a parameter where a higher value indicates stronger simulated sleepiness of the robot 1. The robot 1 transitions between the "awake mode" and the "sleep mode" based on the "sleepiness value". The "growth days" is the number of days counted since the first activation day of the robot 1. The "growth days" represents the length of a simulated growth period of the robot 1. The "growth days" may also represent the length of the cumulative operation period of the robot 1.

The "emotion values" represent simulated emotions of the robot 1 and include an "emotion value (X)" and an "emotion value (Y)". The emotion values represent simulated emotions of the robot 1 based on the position of a plot on an emotion map in the XY coordinate plane illustrated in FIG. 5. The "emotion value (X)" represents the position of the plot in the X-axis direction. A larger value indicates a higher level of security, while a smaller value indicates a higher level of anxiety. The "emotion value (Y)" represents the position of the plot in the Y-axis direction. A larger value indicates a higher level of excitement, while a smaller value indicates a higher level of apathy. The maximum value for the "emotion value (X)" and "emotion value (Y)" is "200", and the minimum value is "-200". Therefore, the emotion values correspond to a coordinate within an emotion region R, which is a square with a side length of 400. The emotion region R in the emotion map is divided into a plurality of regions R1 to R9 corresponding to a plurality of different emotions. The region R1 satisfying -200 ≤ X ≤ - 67 and 67 ≤ Y ≤ 200 represents the emotion of "irritation". The region R2 satisfying -66 ≤ X ≤ 66 and 67 ≤ Y ≤ 200 represents the emotion of "excitement". The region R3 satisfying 67 ≤ X ≤ 200 and 67 ≤ Y ≤ 200 represents the emotion of "joy". The region R4 satisfying -200 ≤ X ≤ -67 and -66 ≤ Y ≤ 66 represents the emotion of "anxiety". The region R5 satisfying -66 ≤ X ≤ 66 and -66 ≤ Y ≤ 66 represents the emotion of "normal". The region R6 satisfying 67 ≤ X ≤ 200 and -66 ≤ Y ≤ 66 represents the emotion of "security". The region R7 satisfying -200 ≤ X ≤ -67 and -200 ≤ Y ≤ -67 represents the emotion of "sadness". The region R8 satisfying -66 ≤ X ≤ 66 and -200 ≤ Y ≤ -67 represents the emotion of "apathy". The region R9 satisfying 67 ≤ X ≤ 200 and -200 ≤ Y ≤ -67 represents the emotion of "tranquility". The length of one side of the emotion region R and the regions R1 to R9 may be increased within a certain range according to the growth days of the robot 1. For example, the emotion region R may initially be defined as a region of -100 ≤ X ≤ 100 and -100 ≤ Y ≤ 100 and may be expanded to a region of -200 ≤ X ≤ 200 and -200 ≤ Y ≤ 200 according to the growth days of the robot 1. The emotion values change each time the robot 1 receives an external stimulus or the like. The amount of change in the emotion values per instance is selected from the following variables: DXP, DXM, DYP, and DYM.
DXP: Change amount in the +X direction
DXM: Change amount in the -X direction
DYP: Change amount in the +Y direction
DYM: Change amount in the -Y direction

The variable DXP represents the ease of feeling secure, the variable DXM represents the ease of feeling anxious, the variable DYP represents the ease of feeling excited, and the variable DYM represents the ease of feeling apathetic. In the present embodiment, the initial values for the variables DXP, DXM, DYP, and DYM are "10". Furthermore, the variables DXP, DXM, DYP, and DYM are increased by a predetermined amount when the emotion values reach the maximum value in the +X-axis direction, -X-axis direction, +Y-axis direction, and -Y-axis direction, respectively. In the present embodiment, the maximum values for the variables DXP, DXM, DYP, and DYM are "20".

The "personality values" illustrated in FIG. 4 represent simulated personalities of the robot 1 and include "personality value (cheerful)", "personality value (shy)", "personality value (active)", and "personality value (clingy)". The "personality value (cheerful)" is the value obtained by subtracting "10" from the variable DXP and represents the ease of shifting toward the positive direction of the X-axis on the emotion map, i.e., the ease of feeling secure. The "personality value (shy) " is the value obtained by subtracting "10" from the variable DXM and represents the ease of shifting toward the negative direction on the X-axis of the emotion map, i.e., the ease of feeling anxious. The "personality value (active)" is the value obtained by subtracting "10" from the variable DYP and represents the ease of shifting toward the positive direction of the Y-axis on the emotion map, i.e., the ease of feeling excited. The "personality value (clingy)" is the value obtained by subtracting "10" from the variable DYM and represents the ease of shifting toward the negative direction of the Y-axis on the emotion map, i.e., the ease of feeling apathetic. Therefore, the personality values change according to the respective changes in the variables DXP, DXM, DYP, and DYM, with initial values of "0" and maximum values of "10". Thus, the four personality values represent the degree of four distinct personalities. The personality corresponding to the largest personality value among the four is designated as the personality of the robot 1 at that point in time. For example, in the example illustrated in FIG. 4, since the "personality value (clingy)" is the largest at "7", the personality of the robot 1 at this point is determined to be "clingy". When two or more personality values are identical and the largest, one personality is determined according to a predetermined priority order. In the present embodiment, the priority order of personalities, from highest to lowest, is "cheerful", "active", "shy", and "clingy".

The action setting data 133 shown in FIG. 3 stores various settings related to the actions of the robot 1. The action setting data 133 includes an external stimulus table 1331 and a gesture selection table 1332. The external stimulus table 1331 is referenced when the type of external stimulus received by the robot 1 is to be determined. The gesture selection table 1332 is referenced when a gesture (action) performed by the robot 1 in response to the external stimulus is to be selected. The contents of the external stimulus table 1331 and the gesture selection table 1332 will be described later. Furthermore, the action setting data 133 stores settings related to the action contents of multiple gestures performed by the robot 1. Settings related to the action contents include, for example, settings for the operation timing and operation amount of the twisting motor 41 and the up-down movement motor 42 of the drive unit 40, settings for the pitch (tone height), duration, and volume of sounds output by the sound output unit 30, and the like.

The operation unit 20 includes operation buttons, operation knobs, and the like for turning the power on and off, as well as for adjusting the volume of sounds output by the sound output unit 30. The operation unit 20 outputs operation information corresponding to input operations on the operation buttons and the operation knobs to the CPU 11. The sound output unit 30 includes a speaker and outputs sounds at a pitch (tone height), duration, and volume corresponding to control signals and sound data transmitted from the CPU 11. This sound may be a sound that imitates the cry of a living being. The drive unit 40 operates the above-described twisting motor 41 and up-down movement motor 42 according to control signals transmitted from the CPU 11.

The sensing unit 50 includes the above-described touch sensors 51, motion sensor 52, illuminance sensor 53, and microphone 54, and outputs detection data from the sensors and the microphone 54 to the CPU 11. The touch sensors 51 detect contact of an object with the robot 1. Here, the object may be a user. The touch sensors 51 of the present embodiment can further detect the intensity of the contact. Each of the touch sensors 51 includes, for example, a pressure sensor such as a capacitive sensor or a piezoelectric sensor and outputs detection data regarding the presence or absence of contact with the robot 1 to the CPU 11. The touch sensor 51 detects the intensity of the contact with the robot 1 and outputs the detected intensity to the CPU 11. The touch sensor 51 may be configured to detect pressure equal to or higher than a predetermined first threshold as contact, while not detecting pressure lower than the first threshold. The first threshold in this case may be changeable by the CPU 11. Increasing the first threshold corresponds to reducing the detection sensitivity of the touch sensor 51 for contact.

The acceleration sensor 521 and the gyro sensor 522 of the motion sensor 52 detect movement of the robot 1. The movement of the robot 1 includes movement in response to the mechanical action that the robot 1 receives. The motion sensor 52 may also be referred to as an inertial sensor. The acceleration sensor 521 detects acceleration in each of the three orthogonal axial directions and outputs the detection data to the CPU 11. The gyro sensor 522 detects angular velocity around each of the three orthogonal axial directions and outputs the detection data to the CPU 11. The acceleration sensor 521 and the gyro sensor 522 each have three detection axes. Therefore, the motion sensor 52 is also called a 6-axis sensor. The illuminance sensor 53 detects the brightness around the robot 1 and outputs the detection data to the CPU 11. The microphone 54 detects sounds around the robot 1 and outputs the sound detection data to the CPU 11. The microphone 54 may be configured to detect sounds with a volume equal to or higher than a predetermined second threshold as external stimuli, while not detecting sounds with a volume lower than the second threshold. The second threshold in this case may be changeable by the CPU 11. Increasing the second threshold corresponds to reducing the detection sensitivity of the microphone 54 for sounds.

The communication unit 60 is a communication module that includes an antenna, a modulation/demodulation circuit, a signal processing circuit, and the like, and performs wireless data communication with external devices according to a predetermined communication standard. The power supply unit 70 includes a battery 71, a battery level detector 72, and a power reception coil 73. The battery 71 supplies power to each component of the robot 1. The battery 71 according to the present embodiment is a secondary battery that can be repeatedly charged by a non-contact charging method. The battery level detector 72 detects the battery level of the battery 71 according to control signals transmitted from the CPU 11, and outputs the detection result to the CPU 11. The charging operation of the battery 71 is performed while the robot 1 is stored (installed) inside a dedicated charger (holder, charging dock, not shown). In the charger, a power transmission coil is disposed at a position facing the power reception coil 73 when the robot 1 is stored. The power reception coil 73 of the robot 1 supplies the battery 71 with current generated by electromagnetic induction in response to the magnetic field generated by the power transmission coil. With this configuration, charging of the battery 71 automatically begins when the robot 1 is stored in the charger. The method for charging the battery 71 is not limited to a non-contact charging method; a contact charging method may also be used.

Next, the operation of the robot 1 will be described. The robot 1 performs reactive actions to external stimuli and spontaneous actions (automatically generated actions) under the control of the CPU 11. Hereafter, the reactive actions and automatically generated actions performed by the robot 1 are referred to as "gestures". The gestures performed by the robot 1 differ depending on whether the operation mode of the robot 1 is the normal mode or the user recognition mode. The CPU 11 operates the robot 1 in the user recognition mode when the CPU 11 recognizes a specific user who has been pre-stored (hereinafter also referred to as the "owner"). The user recognition mode may also be referred to as an "affection mode", indicating that the robot 1 is affectionate toward the owner. The CPU 11 operates the robot 1 in the normal mode when the CPU 11 does not operate the robot 1 in the user recognition mode. "When the CPU 11 recognizes a specific user" may be rephrased as "When the CPU 11 recognizes a specific user as being within a predetermined distance range from the robot 1". Specifically, the CPU 11 acquires sound detection data from the microphone 54 at predetermined intervals (e.g., every few hundred milliseconds). Then, the CPU 11 performs a predetermined voice recognition process on the detection data to determine whether the detected sound is caused by the owner speaking. For this determination, known voiceprint analysis may be used, for example. Voiceprint analysis may include a process of deriving the similarity between predetermined voice feature parameters of detected voice data and the voice feature parameters pertaining to pre-stored voices of the owner. In addition, the voiceprint analysis may include a process of determining that the subject is the owner when the derived similarity is above a predetermined threshold. When the CPU 11 determines that the detected sound is caused by the owner speaking, the CPU 11 transitions the robot 1 from the normal mode to the user recognition mode. Therefore, in the present embodiment, the microphone 54 within the sensing unit 50, serving as a "sensor", is used for owner recognition. Note that sensors other than the microphone 54 within the sensing unit 50 may also be used for owner recognition. The CPU 11 maintains the user recognition mode for a predetermined set time. Upon expiration of the set time, the CPU 11 returns the operation mode from the user recognition mode to the normal mode. In the present embodiment, the set time is one minute or three minutes but is not limited thereto. Specifically, in the present embodiment, the likelihood (probability) that the detected sound is caused by the owner speaking is evaluated in multiple stages through the voice recognition process. If the likelihood is less than a first reference value, the detected sound is determined as "not the owner's voice", and the "owner level" is determined to be "0". If the "owner level" is determined to be "0", the transition to the user recognition mode does not occur, and the robot 1 operates in the normal mode. If the likelihood is greater than or equal to the first reference value and less than a second reference value, which is greater than the first reference value, the "owner level" is determined to be "1". An "owner level" of "1" indicates that the detected sound is "likely the owner's voice". If the "owner level" is determined to be "1", the set time for continuing the user recognition mode is set to one minute, and the robot 1 transitions to the user recognition mode. If the likelihood is equal to or greater than the second reference value, the "owner level" is determined to be "2". An "owner level" of "2" indicates that the detected sound is "definitely the owner's voice". If the "owner level" is determined to be "2", the set time for continuing the user recognition mode is set to three minutes, and the robot 1 transitions to the user recognition mode.

The CPU 11 detects that the robot 1 has received an external stimulus based on detection data from the touch sensors 51, motion sensor 52, and microphone 54, and determines the type of external stimulus received by the robot 1. In the present embodiment, for example, the touch sensors 51, motion sensor 52, and microphone 54 within the sensing unit 50 serving as a "sensor" are used to determine the type of external stimulus. Then, the CPU 11 determines a gesture (reactive action) corresponding to the type of external stimulus received by the robot 1 and causes the robot 1 to perform the determined gesture. Specifically, the CPU 11 drives the twisting motor 41 and the up-down movement motor 42 of the drive unit 40 to cause the robot 1 to perform the gesture and outputs sounds from the sound output unit 30.

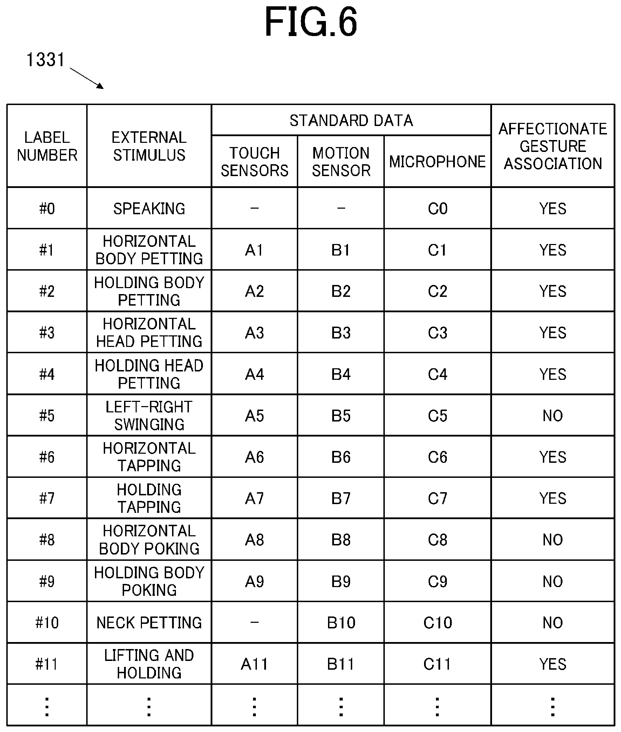

To determine the type of external stimulus received by the robot 1, the CPU 11 acquires detection data from the touch sensors 51, motion sensor 52, and microphone 54 at predetermined intervals (e.g., every few hundred milliseconds). By performing predetermined statistical processing on the detection data from multiple instances (e.g., three instances), a single piece of detection data for determination may be generated. The CPU 11 determines the type of external stimulus received by the robot 1 based on this piece of detection data and the external stimulus table 1331 illustrated in FIG. 6. The external stimulus table 1331 contains pre-generated standard data associated with each of a plurality of different external stimuli. The standard data represents the standard detection data that the touch sensors 51, motion sensor 52, and microphone 54 detect when the robot 1 receives the external stimulus corresponding to the data row. The external stimulus table 1331 illustrated in FIG. 6 includes external stimuli such as "speaking", "horizontal body petting", "holding body petting", "horizontal head petting", "holding head petting", "left-right swinging", "horizontal tapping", "holding tapping", "horizontal body poking", "holding body poking", "neck petting", and "lifting and holding". Each external stimulus is assigned a unique label number. As described above, "speaking" is determined by performing the voice recognition process on the detection data from the microphone 54; therefore, standard data need not be prepared for "speaking". The term "horizontal" in these external stimuli indicates stimuli received while the robot 1 is placed on a substantially horizontal surface. The term "holding" represents external stimuli received while the robot 1 is held by the user. The term "body petting" represents the user petting the torso 103 of the robot 1. The term "head petting" represents the user petting the head 101 of the robot 1. The term "left-right swinging" represents the user holding the robot 1 and swinging the robot 1 to the left and right. The term "tapping" represents the user lightly tapping the robot 1 with his/her palm or similar. The term "body poking" (poking) represents the user lightly poking the robot 1 with his/her fingertip or similar. The term "neck petting" represents the user petting the portion between the head 101 and torso 103 of the robot 1. Since this "neck petting" is an external stimulus to a region where no touch sensor 51 is placed, the standard data for "neck petting" does not include detection data "A" corresponding to the touch sensors 51. The term "lifting and holding" represents the user lifting the robot 1 and holding the robot 1 in his/her arms. Note that the external stimuli shown in FIG. 6 are examples; the external stimulus table 1331 may also contain standard data corresponding to external stimuli other than these. The following method is used to determine external stimuli other than "speaking". The CPU 11 derives the similarity between the detection data acquired from the touch sensors 51, motion sensor 52, and microphone 54, and the standard data for the respective plurality of external stimuli in the external stimulus table 1331. Then, as the external stimulus received by the robot 1, the CPU 11 determines the external stimulus corresponding to the standard data with the highest similarity to the acquired detection data among the plurality of external stimuli in the external stimulus table 1331. For example, the CPU 11 may convert the detection data and standard data into points in an n-dimensional space and determine that the similarity is higher when the Euclidean distance between these points is smaller. Thus, by utilizing the microphone 54 in addition to the touch sensors 51 and motion sensor 52, it becomes possible to distinguish and determine external stimuli with differing contact patterns. This is because the volume and duration of sounds generated by contact differ depending on the contact pattern, and these differences can be detected by the microphone 54.

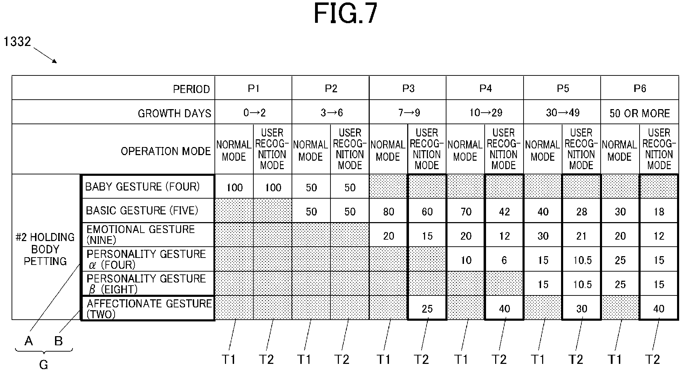

When the type of external stimulus received by the robot 1 is determined, the CPU 11 refers to the gesture selection table 1332 corresponding to the determined external stimulus to decide a gesture for the robot 1 to perform in response to the external stimulus. For example, when the CPU 11 determines that the robot 1 has received "holding body petting", the CPU 11 refers to the gesture selection table 1332 in FIG. 7 corresponding to "holding body petting". Gesture selection tables 1332 for the respective external stimuli other than "holding body petting" are also pre-generated and stored in the storage unit 13. When an external stimulus is received, the CPU 11 causes the robot 1 to perform either one gesture in general gesture A (general action) or affectionate gesture B (specific action) shown in FIG. 7. The general gesture A includes "baby gesture", "basic gesture", "emotional gesture", "personality gesture α", and "personality gesture β". The "baby gesture" includes gestures mimicking a baby that the robot 1 performs during its early post-birth period (the period immediately after initial startup). The "basic gesture" includes fundamental gestures performed by the robot 1, regardless of emotions or personalities. The "emotional gesture" includes gestures performed by the robot 1 according to emotions of the robot 1. As described above, an emotion of the robot 1 is determined by which of the regions R1 to R9 in FIG. 5 the coordinates of the emotion values fall into. The "personality gesture α" and the "personality gesture β" include gestures performed by the robot 1 according to personalities of the robot 1. The general gesture A shown in FIG. 7 includes gestures that can be selected when the robot 1 is operating in the awake mode. When the robot 1 is operating in the sleep mode, the general gesture A is replaced with sleep mode-specific gestures (not shown). The "affectionate gesture B" includes gestures indicating that the robot 1 is affectionate toward the user. In the present embodiment, the affectionate gesture B is selectable in both the awake mode and the sleep mode, but the affectionate gesture B may alternatively be selectable only in the awake mode. In the present embodiment, the "baby gesture" is set to include four gestures, the "basic gesture" five gestures, the "emotional gesture" nine gestures, the "personality gesture α" four gestures, the "personality gesture β" eight gestures, and the "affectionate gesture B" two gestures.

The general gesture A and the affectionate gesture B are collectively denoted as a "candidate gesture group G". The gesture selection table 1332 is stored with the probabilities for selecting each gesture included in the candidate gesture group G. A table containing the selection probability for each gesture included in the candidate gesture group G is denoted as a "probability table T1" or a "probability table T2". In FIG. 7, a single probability table is a column of cells consisting of six cells corresponding to six types of gestures. The values listed in the probability tables T1 and T2 represent percentages, and blank cells indicate a probability of 0%. The probability table T1 is selected when the robot 1 is operating in the normal mode, and the probability table T2 is selected when the robot 1 is operating in the user recognition mode. As illustrated in FIG. 7, the probability tables T1 and T2 are separately set for each of the periods P1 to P6 corresponding to the growth days of the robot 1. The period P1 is the period from 0 to 2 growth days. The period P2 is the period from 3 to 6 growth days. The period P3 is the period from 7 to 9 growth days. The period P4 is the period from 10 to 29 growth days. The period P5 is the period from 30 to 49 growth days. The period P6 is the period of 50 growth days or more. In FIG. 7, the candidate gesture group G is composed of six types of gestures, including gestures with a probability of 0%. However, the candidate gesture group G may also be composed of gestures with a probability greater than 0% from among these six types of gestures.

In the probability tables T1 and T2 corresponding to the period P1, the selection probability for the baby gesture is set to 100%. Therefore, when the growth days are 2 days or less, the robot 1 performs only the baby gesture. In the probability tables T1 and T2 corresponding to the period P2, the selection probabilities for the baby gesture and the basic gesture are each set to 50%. Therefore, upon reaching the period P2, the robot 1 begins performing the basic gesture in addition to the baby gesture. As days pass in the period P2, the selection probability for the baby gesture may decrease, while the selection probability for the basic gesture may increase. From the period P3 onwards, the selection probability for the baby gesture becomes 0%, and the robot 1 no longer performs the baby gesture. From the period P3 onwards, a selection probability greater than zero is set for the emotional gesture, and the robot 1 begins performing the emotional gesture in addition to the basic gesture. From the period P4 onwards, a selection probability greater than zero is set for the personality gesture α, and the robot 1 further begins performing the personality gesture α. From the period P5 onwards, a selection probability greater than zero is set for the personality gesture β, and the robot 1 still further begins performing the personality gesture β.

In the probability table T1 corresponding to the normal mode, the selection probability for the affectionate gesture B is 0% for all the periods P1 to P6. Therefore, when the robot 1 is operating in the normal mode, the robot 1 does not perform the affectionate gesture B. On the other hand, from the period P3 onwards, in the probability table T2 corresponding to the user recognition mode, the selection probability for the affectionate gesture B is set to a value greater than zero. Therefore, from the period P3 onwards, the robot 1 performs the affectionate gesture B with a predetermined probability when operating in the user recognition mode. The affectionate gesture B corresponds to specific actions that are not performed in the normal mode but can be performed in the user recognition mode. The ratio of the selection probabilities for the respective gestures (excluding the affectionate gesture B) in the probability table T2 for a certain period is equal to the ratio of the selection probabilities for the respective gestures in the probability table T1 for that same period. For example, in the probability table T2 for the period P3, the selection probability for the affectionate gesture B is 25%. Furthermore, the selection probabilities for the remaining "basic gesture" and "emotional gesture" are 60% and 15%, respectively, with a ratio of four to one. Meanwhile, in the probability table T1 for the same period P3, the selection probabilities for the "basic gesture" and the "emotional gesture" are "80%" and "20%" respectively, and their ratio (four to one) is the same as in the user recognition mode.

The selection probability for the affectionate gesture B is separately defined for each of the periods P3 to P6. In other words, the selection probability for the affectionate gesture B is set to a value corresponding to the growth days. Specifically, during the periods P3 to P6, the selection probabilities for the affectionate gesture B are set to "25%", "40%", "30%", and "40%", respectively. The reason why the selection probability for the affectionate gesture B does not monotonically increase with the growth days is as follows. As the growth days increase (particularly when transitioning from the period P4 to the period P5), the number of selection candidates for the general gesture A increases. If the selection probability for the affectionate gesture B were uniformly and monotonically increased, the probability of each gesture in the general gesture A being selected would diverge significantly from the probability of each gesture in the affectionate gesture B being selected. To suppress this gap, the selection probability for the affectionate gesture B is deliberately kept low, especially during the periods P5 and P6.

Note that some external stimuli do not have the affectionate gesture B assigned to them. Whether the affectionate gesture B is assigned to an external stimulus is predetermined and stored in the external stimulus table 1331 illustrated in FIG. 6. In the example illustrated in FIG. 6, the affectionate gesture B is not assigned to "left-right swinging", "horizontal body poking", "holding body poking", and "neck petting". In the gesture selection table 1332 corresponding to these external stimuli, the probability table T1 for the normal mode and the probability table T2 for the user recognition mode are identical, with both setting the selection probability for the affectionate gesture B to 0%.

The CPU 11 selects one of the probability tables T1 and T2 in the gesture selection table 1332 based on the value of the growth days in the status data 132 and the operation mode (normal mode or user recognition mode). Then, the CPU 11 determines one gesture to be performed by the robot 1 based on the probability set in the selected probability table T1 or T2. Thus, the CPU 11 determines the gesture to be performed by the robot 1 by selecting the gesture from the candidate gesture group G based on the length of the growth days of the robot 1. Specifically, the CPU 11 determines the gesture to be performed by the robot 1 by selecting the gesture from the candidate gesture group G based on the probability according to the length of the growth days.

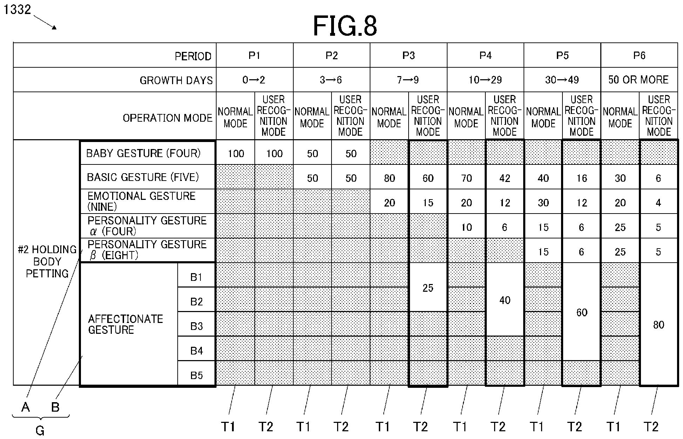

The gesture selection table 1332 shown in FIG. 7 is an example and may be modified in various ways. For example, as shown in FIG. 8, the selection probabilities may be set such that the affectionate gesture B is selected with a higher probability as the growth days become longer. In the example shown in FIG. 8, the selection probability for the affectionate gesture B is set to 0% during the periods P1 and P2, 25% during the period P3, 40% during the period P4, 60% during the period P5, and 80% during the period P6. Furthermore, the number of selectable affectionate gestures B included in the candidate gesture group G may be defined based on the length of the growth days. Specifically, the number of selectable affectionate gestures B included in the candidate gesture group G may be defined such that the number of selectable affectionate gestures B becomes greater as the growth days become longer. Here, the selectable affectionate gestures B refer to those gestures in the affectionate gesture B whose selection probability is set to a value greater than 0. In the example shown in FIG. 8, the candidate gesture group G includes five gestures, B1 to B5, as the affectionate gesture. Among these five, two gestures B1 and B2 are selectable during the period P3, three gestures B1 to B3 are selectable during the period P4, four gestures B1 to B4 are selectable during the period P5, and all the five gestures B1 to B5 are selectable during the period P6. FIG. 8 shows that starting from the period P3, one gesture is added to the selectable affectionate gestures B each time the next period begins; however, the present disclosure is not limited to this pattern. For example, the selectable affectionate gestures B may differ for each period. For example, the selectable affectionate gestures B may include a gesture B1 during the period P3, gestures B2 and B3 during the period P4, gestures B4 to B6 during the period P5, and gestures B7 to B10 during the period P6. Here, the gestures B1 to B10 in the affectionate gesture B may all be mutually distinct. Additionally, the affectionate gesture B may be included as selection candidates during the period P1 and/or the period P2.

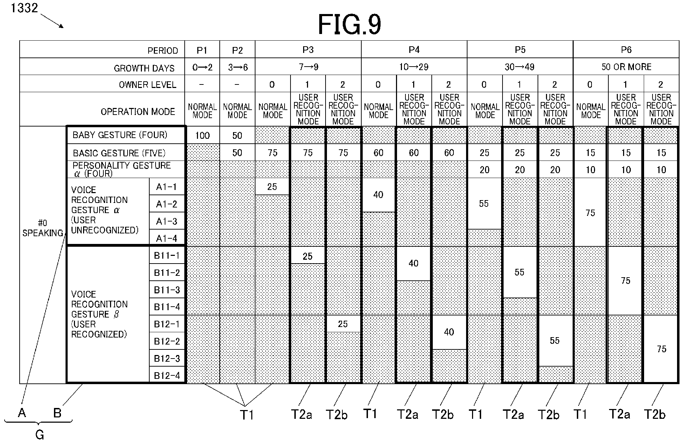

When determining that an external stimulus corresponding to "speaking" has been received, the CPU 11 refers to the gesture selection table 1332 in FIG. 9 corresponding to "speaking". Upon receiving an external stimulus corresponding to "speaking", the CPU 11 causes the robot 1 to perform either one gesture in the general gesture A (general action) or one gesture in the affectionate gesture B (specific action) shown in FIG. 9. The general gesture A in FIG. 9 includes the "baby gesture", the "basic gesture", the "personality gesture α", and "voice recognition gesture α (user unrecognized)". The "voice recognition gesture α (user unrecognized)" includes gestures that the robot 1 performs in response to a voice the robot 1 recognizes as not belonging to the owner. In FIG. 9, the affectionate gesture B is "voice recognition gesture β (user recognized)". The "voice recognition gesture β (user recognized)" includes gestures that the robot 1 performs in response to a voice the robot 1 recognizes as belonging to the owner, indicating that the robot 1 recognizes the user. The "voice recognition gesture α (user unrecognized)" is set to include four gestures, "Gesture A1-1" to "Gesture A1-4". The "voice recognition gesture β (user recognized)" is set to include eight gestures, "Gesture B11-1" to "Gesture B11-4" and "Gesture B12-1" to "Gesture B12-4".

In FIG. 9, the probability tables T1 and T2 (T2a and T2b) are cell columns consisting of fifteen cells corresponding to fifteen types of gestures. For the periods P1 and P2, only the probability table T1 corresponding to the normal mode is set. In the probability table T1 corresponding to the period P1, the selection probability for the baby gesture is set to 100%. In the probability table T1 corresponding to the period P2, the selection probabilities for the baby gesture and the basic gesture are each set to 50%. For each of the periods P3 to P6, the probability table T1 corresponding to the normal mode and two types of probability tables T2a and T2b corresponding to the user recognition mode are set. When it is determined that the owner level is "0" as the result of performing the voice recognition process on the detection data from the microphone 54, the robot 1 operates in the normal mode, and the probability table T1 is selected. In the probability table T1, selection probabilities greater than zero are set for at least some of the baby gesture, basic gesture, and personality gesture. Additionally, selection probabilities greater than zero are set for at least some of the gestures, "Gesture A1-1" to "Gesture A1-4", in the voice recognition gesture α (user unrecognized). The selection probabilities for the voice recognition gesture α (user unrecognized) during the periods P3 to P6 are set to "25%", "40%", "55%", and "75%", respectively. Furthermore, the numbers of gestures available for selection in the voice recognition gesture α (user unrecognized) during the periods P3 to P6 are "one", "two", "three", and "four", respectively. That is, the number of gestures available for selection in the voice recognition gesture α (user unrecognized) increases in later periods.

When it is determined that the owner level is "1" as the result of performing the voice recognition process on the detection data from the microphone 54, the robot 1 transitions to the user recognition mode, and the probability table T2a is selected. The probability table T2a corresponds to modifying the probability table T1 for the same period as follows: changing the selection probability for the voice recognition gesture α (user unrecognized) to 0, and setting the selection probability for at least some of the gestures, "Gesture B11-1" to "Gesture B11-4", in the voice recognition gesture β (user recognized) to be greater than 0. When it is determined that the owner level is "2" as the result of performing the voice recognition process on the detection data from the microphone 54, the robot 1 transitions to the user recognition mode, and the probability table T2b is selected. The probability table T2b corresponds to modifying the probability table T1 for the same period as follows: changing the selection probability for the voice recognition gesture α (user unrecognized) to 0, and setting the selection probability for at least some of the gestures, "Gesture B12-1" to "Gesture B12-4", in the voice recognition gesture β (user recognized) to be greater than 0. In the probability tables T2a and T2b, the selection probabilities for the voice recognition gesture β (user recognized) during the periods P3 to P6 are set to "25%", "40%", "55%", and "75%", respectively. Furthermore, the numbers of gestures available for selection in the voice recognition gesture β (user recognized) during the periods P3 to P6 are "one", "two", "three", and "four", respectively. That is, the number of gestures available for selection in the voice recognition gesture β (user recognized) increases in later periods.

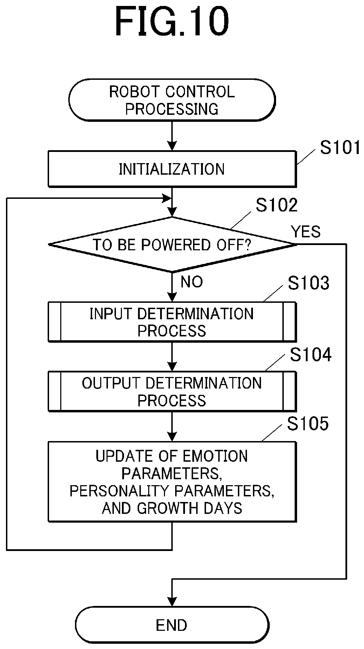

Next, with reference to FIGS. 10 to 12, robot control processing executed by the CPU 11 to realize the above-described operation of the robot 1 will be described. The robot control processing begins when the power to the robot 1 is turned on. As illustrated in FIG. 10, when the robot control processing begins, the CPU 11 executes predetermined initialization processing (step S101). Step S101 includes setting the operation mode of the robot 1 to the normal mode. The CPU 11 determines whether the robot 1 is to enter a power-off state (step S102). Here, the CPU 11 determines that the robot 1 is to enter a power-off state when a user performs a power-off operation or when the remaining charge of the battery 71 falls below a predetermined lower limit value. If the CPU 11 determines that the robot 1 is not to enter the power-off state ("NO" in step S102), the CPU 11 executes the input determination process described later (step S103). Subsequently, the CPU 11 executes an output determination process to determine the output (i.e., gesture) of the robot 1 based on the result of the input determination process and causes the robot 1 to perform the gesture (step S104). Afterwards, the CPU 11 updates the emotion parameters, personality parameters, and growth days in the status data 132 based on the operation history of the robot 1 and stores them in the storage unit 13 (step S105). Upon completion of step S105, the CPU 11 returns the processing to step S102. The loop processing from step S102 to step S105 is repeatedly executed at predetermined intervals (e.g., every few hundred milliseconds). If the CPU 11 determines in step S102 that the robot 1 is to enter the power-off state ("YES" in step S102), the CPU 11 ends the robot control processing.

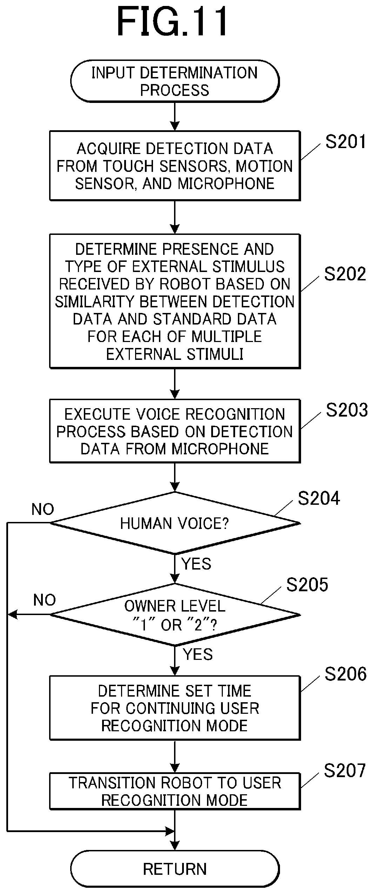

As illustrated in FIG. 11, when the input determination process is called, the CPU 11 acquires detection data from the touch sensors 51, motion sensor 52, and microphone 54 (step S201). As described above, the CPU 11 derives the similarity between the acquired detection data and the standard data for each of the plurality of external stimuli. Based on this similarity, the CPU 11 determines the presence and type of an external stimulus received by the robot 1 (step S202). Specifically, the CPU 11 determines that the external stimulus corresponding to the standard data with the highest similarity is the external stimulus received by the robot 1. Furthermore, the CPU 11 determines that the robot 1 has not received any external stimulus when, for example, the similarity with all the external stimuli falls below a predetermined reference value. The CPU 11 performs a voice recognition process based on the detection data from the microphone 54 (step S203). Here, by performing a predetermined voice recognition process on the detection data from the microphone 54, the CPU 11 acquires voice information related to the detected voice. This voice information includes information on whether the detected voice is a human voice or not. Furthermore, when the detected voice is a human voice, this voice information includes information on the determination result of whether the detected voice is the owner's voice, i.e., the owner level value. If the CPU 11 determines that the detected voice is a human voice ("YES" in step S204), the CPU 11 determines whether the detected voice is the owner's voice, i.e., whether the owner level is "1" or "2" (step S205). If the CPU 11 determines that the owner level is "1" or "2" ("YES" in step S205), the CPU 11 determines the set time for continuing the user recognition mode according to the owner level (step S206). Here, the CPU 11 sets the set time to one minute when the owner level is "1" and sets the set time to three minutes when the owner level is "2". Afterwards, the CPU 11 transitions the robot 1 to the user recognition mode and changes the "operation mode" in the status data 132 to the "user recognition mode" (step S207). The CPU 11 ends the input determination process when one of the following occurs: step S207 is completed; the CPU determines that the detected voice is not a human voice ("NO" in step S204); or the CPU 11 determines that the owner level is "0" ("NO" in step S205).

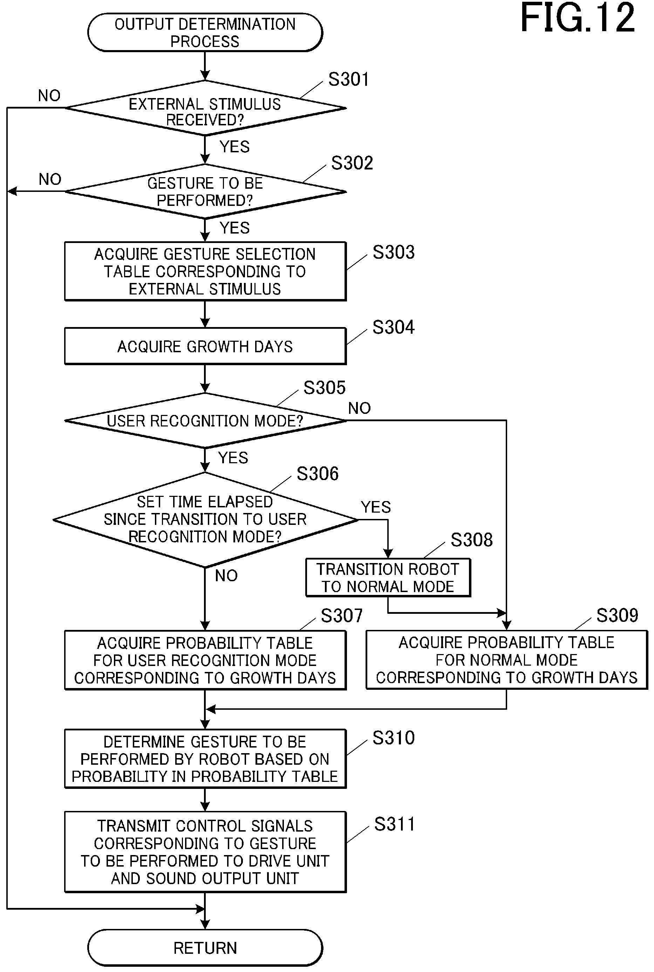

As illustrated in FIG. 12, when the output determination process is called and the CPU 11 determines in the input determination process of FIG. 11 that the robot 1 has received an external stimulus ("YES" in step S301), the CPU 11 determines whether to have a gesture performed by the robot 1 (step S302). For example, when the CPU 11 determines that the robot 1 is currently performing another gesture, the CPU 11 prioritizes that other gesture and determines not to have a new gesture performed (started) by the robot 1. If the CPU 11 determines to have a gesture performed by the robot 1 ("YES" in step S302), the CPU 11 acquires the gesture selection table 1332 corresponding to the determined external stimulus (step S303). The CPU 11 acquires the value for the growth days from the status data 132 (step S304). The CPU 11 determines whether the robot 1 is operating in the user recognition mode, i.e., whether the "operation mode" in the status data 132 is the "user recognition mode" (step S305). If the robot 1 is operating in the user recognition mode ("YES" in step S305), the CPU 11 determines whether the set time (one minute or three minutes) determined in step S206 has elapsed since the transition to the user recognition mode in step S207 of FIG. 11 (step S306). If the CPU 11 determines that the set time has not elapsed ("NO" in step S306), the CPU 11 acquires the probability table T2 for the user recognition mode corresponding to the period of the growth days acquired in step S304 (step S307). When the external stimulus is "speaking", the CPU 11 acquires either the probability table T2a or T2b, depending on the owner level. If the CPU 11 determines that the set time has elapsed ("YES" in step S306), the CPU 11 transitions the operation mode of the robot 1 to the normal mode and changes the "operation mode" in the status data 132 to the "normal mode" (step S308). When the CPU 11 has executed step S308, or when the CPU 11 determines in step S305 that the operation mode of the robot 1 is not the user recognition mode (i.e., it is the normal mode) ("NO" in step S305), the CPU 11 acquires the normal mode probability table T1 corresponding to the period of the growth days acquired in step S304 (step S309). Upon completion of step S307 or S309, the CPU 11 determines the gesture to be performed by the robot 1 based on the probability in the acquired probability table T1 or T2 (step S310). The CPU 11 transmits control signals corresponding to the gesture to be performed to the drive unit 40 and the sound output unit 30 (step S311). Thus, the CPU 11 drives the twisting motor 41 and the up-down movement motor 42 of the drive unit 40 to cause the robot 1 to perform the determined gesture and outputs sounds from the sound output unit 30. When step S311 is completed, or when the process branches to "NO" in either step S301 or S302, the CPU 11 ends the output determination process.

As described above, the control device 10 according to the present embodiment includes the CPU 11. In response to the CPU 11 recognizing a specific user based on detection data from the microphone 54 of the robot 1, the CPU 11 operates the robot 1 in the user recognition mode. When the CPU 11 does not operate the robot in the user recognition mode, the CPU 11 operates the robot 1 in the normal mode. During operating the robot 1 in the user recognition mode, the CPU 11 determines a gesture to be performed by the robot 1 by selecting the gesture from the candidate gesture group G based on the length of the growth days of the robot 1. The candidate gesture group includes the affectionate gesture B, which is not performed in the normal mode but can be performed in the user recognition mode. This allows the timing and frequency of the robot 1 performing the affectionate gesture B to vary according to the length of the growth days, which corresponds to a simulated growth period of the robot 1. Consequently, the affectionate gesture B performed by the robot 1 enables the user to perceive the growth of the robot 1 corresponding to the growth period. This enables the robot 1 to perform actions that convey a sense of lifelike growth.

Furthermore, in response to the CPU 11 determining that the robot 1 has received an external stimulus based on detection data from the touch sensors 51, motion sensor 52, and microphone 54, the CPU 11 determines a gesture that is a reactive action corresponding to the external stimulus, and causes the robot 1 to perform the gesture. This enables the robot 1 to perform the affectionate gesture B as a reactive action to communication from the user to the robot 1.

Furthermore, the CPU 11 determines a gesture by selecting the gesture from the candidate gesture group G, which includes the affectionate gesture B and the general gesture A (different from the affectionate gesture B), based on the probability according to the length of the growth days. This allows the frequency of the robot 1 performing the affectionate gesture B to vary according to the growth of the robot 1. Consequently, the robot 1 can be made to appear more lifelike.

Furthermore, the CPU 11 may determine gestures such that the affectionate gesture B is selected with a higher probability as the growth days become longer. This allows the frequency of the robot 1 performing the affectionate gesture B to increase as the robot 1 grows. This makes it possible to express how the robot 1 becomes more affectionate toward the user as the robot 1 grows. This enables the realization of the robot 1 that appears more lifelike.

Furthermore, the number of selectable affectionate gestures B included in the candidate gesture group G may be defined according to the length of the growth days. This allows the affectionate gesture B performed by the robot 1 to change according to the growth of the robot 1. Consequently, the robot 1 that appears more lifelike can be realized.

Furthermore, the number of selectable affectionate gestures B included in the candidate gesture group G may be defined such that the number of selectable affectionate gestures B becomes greater as the growth days become longer. This allows the number of gestures in the affectionate gesture B that can be performed by the robot 1 to increase as the robot 1 grows. Consequently, the robot 1 that appears more lifelike can be realized.

Furthermore, the robot 1 according to the present embodiment includes the control device 10 and the microphone 54. This enables the realization of the robot 1 that performs actions that convey a sense of lifelike growth.

Furthermore, according to a control method of the present embodiment, the CPU 11 executing the above processing enables the robot 1 to perform actions that convey a sense of lifelike growth. Furthermore, the program 131 according to the present embodiment causes the CPU 11 to execute the above processing. This enables the robot 1 to perform actions that convey a sense of lifelike growth.

The present disclosure is not limited to the above embodiment, and various modifications are possible. For example, the user recognition mode may be any operation mode executed when the robot 1 (CPU 11) recognizes a specific user. Furthermore, while the affectionate gesture has been given as an example of the specific actions, the specific actions are not limited thereto. The specific actions may be any actions (gestures) that are not performed in the normal mode but can be performed in the user recognition mode.

Furthermore, in the above embodiment, an example has been described where a specific user is recognized based on the detection result of the user speaking, and this is used as a trigger for transitioning to the user recognition mode. However, the present disclosure is not limited to this configuration. For example, a specific user may be recognized by detecting a specific external stimulus (e.g., "horizontal tapping") directed at the robot 1, and this may also be used as a trigger for transitioning to the user recognition mode. The external stimulus is detected by the sensing unit 50 serving as a "sensor".

Furthermore, while the growth days have been given as an example of the simulated growth period, the simulated growth period is not limited thereto. For example, the simulated growth period may be the cumulative operation time since the initial activation of the robot 1. Specifically, the simulated growth period is not limited to a period in units of days and may be a period in units of hours, minutes, seconds, or the like.

The configuration of the robot 1 is not limited to the configuration illustrated in FIGS. 1 to 3. For example, the robot may be a robot modeled after real living creatures such as humans, animals, birds, or fish; a robot modeled after extinct creatures such as dinosaurs; or a robot modeled after fictional creatures.

In the above description, an example has been disclosed in which a flash memory is used for the storage unit 13 as a computer-readable medium storing the program according to the present disclosure, but the present disclosure is not limited thereto. As another computer-readable medium, an information recording medium such as a hard disk drive (HDD), a solid-state drive (SSD) or a CD-ROM may be used.

A carrier wave is also applied to the present disclosure as a medium that provides data of the program according to the present disclosure via a communication line.

The detailed configuration and the detailed operation of each component of the robot 1 in the above embodiments can be appropriately changed without departing from the gist of the present disclosure. Although the embodiments according to the present invention have been described, the scope of the present invention is not limited to the above-described embodiments and includes the scope of the invention as described in the claims and equivalents thereof.

## Claims

1. A control device (10) comprising one or more processors (11) configured to:
operate a robot (1) in a user recognition mode in response to the one or more processors (11) recognizing a specific user based on detection data from a sensor (50) of the robot (1); and
operate the robot (1) in a normal mode when not operating the robot (1) in the user recognition mode, wherein,
during operating the robot (1) in the user recognition mode, the one or more processors (11) determine an action to be performed by the robot (1) by selecting the action from a candidate action group (G) based on a length of a simulated growth period of the robot (1), the candidate action group (G) including a specific action (B) that is not performed in the normal mode but is performable in the user recognition mode.

2. The control device (10) according to claim 1, wherein, in response to the one or more processors (11) determining that the robot (1) has received a predetermined external stimulus based on the detection data from the sensor (50), the one or more processors (11)
determine the action that is a reactive action corresponding to the external stimulus, and
cause the robot (1) to perform the determined action.

3. The control device (10) according to claim 1 or 2, wherein
the candidate action group (G) includes the specific action (B) and a general action (A) different from the specific action (B), and
the one or more processors (11) determine the action by selecting the action from the candidate action group (G) based on a probability according to the length of the simulated growth period.

4. The control device (10) according to claim 3, wherein the one or more processors (11) determine the action such that the specific action (B) is selected as the action with a higher probability as the simulated growth period becomes longer.

5. The control device (10) according to any one of claims 1 to 4, wherein
the candidate action group (G) includes the specific action (B) and a general action (A) different from the specific action (B),
a number of the specific action (B) that is included in the candidate action group (G) and is selectable as the action is defined according to the length of the simulated growth period, and
the one or more processors (11) determine the action by selecting the action from the candidate action group (G).

6. The control device (10) according to claim 5, wherein the number of the specific action (B) that is included in the candidate action group (G) and is selectable as the action is defined such that the number becomes greater as the simulated growth period becomes longer.

7. A robot (1) comprising: the control device (10) according to any one of claims 1 to 6; and the sensor (50).

8. A control method executed by a computer (11), comprising:
operating a robot (1) in a user recognition mode in response to recognizing a specific user based on detection data from a sensor (50) of the robot (1); and
operating the robot (1) in a normal mode when not operating the robot (1) in the user recognition mode, wherein,
during operating the robot (1) in the user recognition mode, the control method further comprises determining an action to be performed by the robot (1) by selecting the action from a candidate action group (G) based on a length of a simulated growth period of the robot (1), the candidate action group (G) including a specific action (B) that is not performed in the normal mode but is performable in the user recognition mode.

9. A program (131) that causes a computer (11) to:
operate a robot (1) in a user recognition mode in response to the computer (11) recognizing a specific user based on detection data from a sensor (50) of the robot (1); and
operate the robot (1) in a normal mode when not operating the robot (1) in the user recognition mode, wherein,
during operating the robot (1) in the user recognition mode, the program further causes the computer (11) to determine an action to be performed by the robot (1) by selecting the action from a candidate action group (G) based on a length of a simulated growth period of the robot (1), the candidate action group (G) including a specific action (B) that is not performed in the normal mode but is performable in the user recognition mode.
